Europäisches Patentamt

European Patent Office

Office européen des brevets

(11) Veröffentlichungsnummer: **0 318 790 B1**

# EUROPÄISCHE PATENTSCHRIFT

(45) Veröffentlichungstag der Patentschrift: **18.03.92**

(21) Anmeldenummer: **88119344.5**

(22) Anmeldetag: **21.11.88**

(51) Int. Cl.⁵: **H02M 1/12**

(54) **Hochpass einer Filteranordnung für eine mit Stromrichtern verbundene Leitung.**

(30) Priorität: **04.12.87 DE 3741197**
          **21.03.88 DE 3809444**

(43) Veröffentlichungstag der Anmeldung:
   **07.06.89 Patentblatt  89/23**

(45) Bekanntmachung des Hinweises auf die
   Patenterteilung:
   **18.03.92 Patentblatt  92/12**

(84) Benannte Vertragsstaaten:
   **AT CH DE FR GB LI SE**

(56) Entgegenhaltungen:
   **EP-A- 0 222 261**
   **GB-A- 2 008 868**
   **US-A- 3 038 134**

(73) Patentinhaber: **SIEMENS AKTIENGESELL-
SCHAFT**
**Wittelsbacherplatz 2**
**W-8000 München 2(DE)**

(72) Erfinder: **Krüger, Kurt, Dipl.-Ing.**
**Killingerstrasse 78**
**W-8520 Erlangen(DE)**
Erfinder: **Schmitt, Heino, Dipl.-Ing.**
**Hutweide 59**
**W-8520 Buckenhof(DE)**
Erfinder: **Schultz, Walter, Dipl.-Ing.**
**Mühlenstrasse 11**
**W-8524 Kleinsendelbach(DE)**

**Beschreibung**

Die Erfindung bezieht sich auf einen Hochpaß einer Filteranordnung für eine mit Stromrichtern verbundene Leitung mit hohem Spannungsniveau zur Filterung von Oberschwingungen und Bedämpfung von Resonanzstellen, bestehend aus einer Reihenschaltung von einem ersten Kondensator, einer ersten Drosselspule, einer zweiten Drosselspule, einem Widerstand, der den beiden Drosselspulen parallelgeschaltet ist, einem zweiten Kondensator, der der zweiten Drosselspule parallel zugeordnet ist und einem Dämpfungswiderstand, der der zweiten Drosselspule parallel zugeordnet ist.

Aus der DE-A-35 39 950 ist ein Doppel-Hochpaß der vorgenannten Art bekannt. In dieser Anordnung sind der Parallelkondensator und der Parallelwiderstand für dieselbe Spannung bzw. Spannungshöhe zu bemessen, wie sie an der Paralleldrossel anliegt. Dementsprechend verhalten sich auch die auftretenden Verluste und die resultierenden Baugrößen.

Der Erfindung liegt die Aufgabe zugrunde, einen Hochpaß einer Filteranordnung zur Bedämpfung von mindestens zwei Parallelresonanzen bereitzustellen, der bei einer weiteren Verringerung des Aufwandes und des Platzbedarfs auch in bestehenden Anlagen nachgerüstet werden kann.

Die Aufgabe wird erfindungsgemäß durch einen Hochpaß einer Filteranordnung der eingangs genannten Art gelöst, wobei eine erste Lösung vorsieht, daß der Dämpfungswiderstand in Reihe mit dem zweiten Kondensator geschaltet ist und diese Reihenschaltung der zweiten Drosselspule unmittelbar parallel geschaltet ist.

Diese Ausführung zeichnet sich durch einen einfachen Aufbau aus, für die kleine und verlustarme Bauteile verwendet werden können.

Eine zweite Lösung sieht vor, daß zumindest ein Serienkreis, bestehend aus einem Serienkondensator und einem Serienwiderstand, der zweiten Drosselspule parallelgeschaltet ist.

Diese Ausführung ermöglicht eine einfache Bedämpfung weiterer Frequenzbereiche mit dem gleichen Grundaufbau des Filters, so daß zusätzliche für Hochspannungsniveau ausgelegte Filter eingespart werden können.

Eine vorteilhafte Verwendung und weitere vorteilhafte Ausgestaltungen der Filteranordnung sind in den weiteren Ansprüchen angegeben. Ausführungsbeispiele hierzu sind in der folgenden Beschreibung enthalten.

Die Erfindung wird im folgenden anhand der in den Figuren dargestellten Ausführungsbeispielen näher erläutert. Es zeigen:

FIG 1 einen Doppel-Hochpaß, bei dem der Dämpfungswiderstand in Reihe mit dem zweiten Kondensator angeordnet ist,

FIG 2 einen Hochpaß, der parallel zu seinem Parallelschwingkreis einen Serienkreis enthält,

FIG 3 einen Hochpaß nach FIG 1, der parallel zu seiner zweiten Drosselspule einen Serienkreis aufweist,

FIG 4 einen Hochpaß nach FIG 3, der in Reihe zu seiner zweiten Drosselspule einen Parallelschwingkreis aufweist,

FIG 5 einen Hochpaß nach FIG 4, bei dem der weitere Parallelkreis einen parallelgeschalteten Serienkreis aufweist.

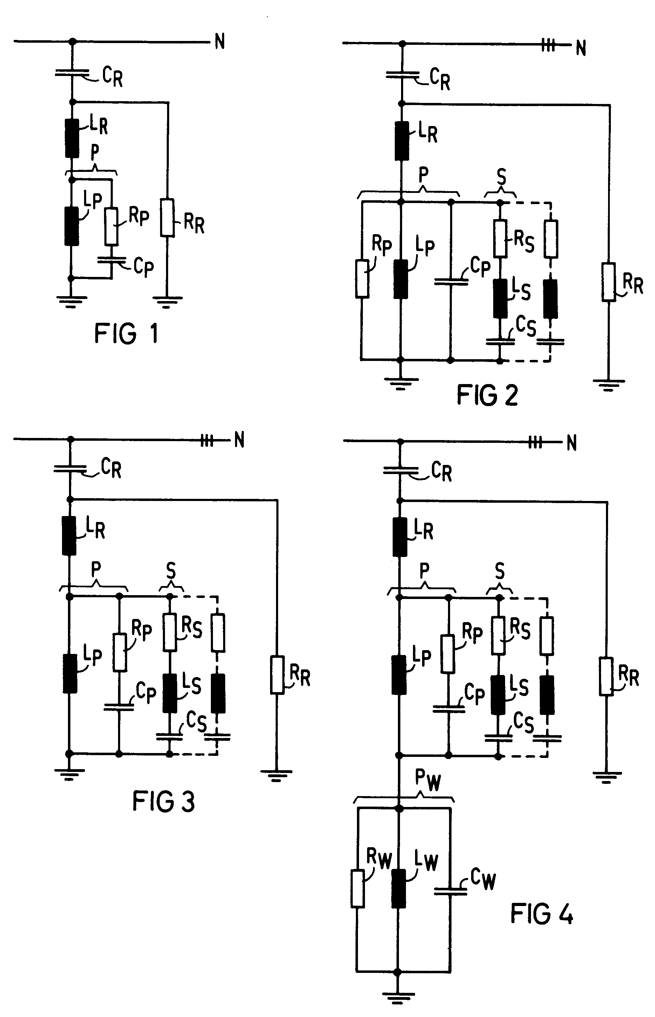

In FIG 1 ist an einer Leitung N, zwischen einem Leitungspol und Erde ein Doppelhochpaß angeschlossen. Er besteht aus der Reihen-schaltung von dem ersten Kondensator $C_R$, der ersten Drosselspule $L_R$ und der zweiten Drosselspule $L_P$, dem den beiden Drosselspulen $L_R$ und $L_P$ parallelgeschalteten Widerstand $R_R$ und der der zweiten Drosselspule $L_P$ parallelgeschalteten Reihenschaltung, bestehend aus den Dämpfungswiderstand $R_P$ und dem zweiten Kondensator $C_P$.

Der erste Kondensator $C_R$ kann als das Leistungselement der Anordnung bezeichnet werden. Zum ersten wird die Ankopplung zur Hochspannung und die Trennung vom niedrigen Spannungsniveau erreicht, zum zweiten wird beim Einsatz des Filters zur Blindleistungskompensation vom ersten Kondensator $C_R$ die gewünschte kapazitive Blindleistung Q bereitgestellt. Diese entspricht

$$Q \sim U^2 \cdot \omega \cdot C_R$$

worin U die Netzspannung und $\omega$ die Kreisfrequenz bedeuten.

Durch die Reihenschaltung von dem Dämpfungswiderstand $R_P$ und dem zweiten Kondensator $C_P$ wird erreicht, daß die beiden Bauteile jeweils nur für eine jeweilige Teilspannung $U_{RP}$, $U_{CR}$ ausgelegt werden müssen und nicht für die an der zweiten Drosselspule $L_P$ anliegende Spannung $U_{LP}$. Dies bedeutet eine Reduzierung der Verluste, der Baugröße und der Kosten bei gleichbleibender Funktion.

Die von dem Parallelschwingkreis P ausgehende Bedämpfung der Harmonischen niedriger Ordnungszahlen bewirkt, daß höchstens eine geringfügige Resonanzerhöhung zwischen dem Netz N und der Filteranordnung auftritt.

In FIG 2 ist ein an sich bekannter Doppel-Hochpaß um einen parallel zu seiner zweiten Drosselspule $L_P$ angeordneten Serienkreis S erweitert. Die Leitung N ist als dreipoliges Netz ausgebildet. An jedem der drei Leitungspole wird ein Doppelhochpaß angeschlossen.

Mit dem auf niedrigem Spannungsniveau liegenden Parallelschwingkreis P wird die Bedämpfung der Harmonischen erreicht. Mit der Erweiterung des Parallelschwingkreises P um den Serienkreis S wird eine Bedämpfung weiterer unerwünschter Harmonischen erreicht, die bisher nur durch Neuanordnung zusätzlicher aufwendiger Filter möglich war. Da der Serienkreis S jetzt auf einem niedrigen Spannungsniveau angeordnet ist, ergibt sich eine wesentlich günstigere Ausführung. Durch das Hinzuschalten mehre rer Serienkreise können auch weitere Harmonische bedämpft werden.

Es ist besonders günstig, wenn zu der Ausführung nach Lösung 1 zumindest ein Serienkreis, bestehend aus einem Serienkondensator und einem Serienwiderstand der zweiten Drosselspule parallelgeschaltet ist (siehe hierzu FIG 3). Durch diese Ausführung ergibt sich eine besonders günstige Reduzierung des Aufwandes bei der Auslegung der Filteranordnung.

Wie in FIG 2 und FIG 3 dargestellt ist es zweckmäßig, wenn der Serienkreis S zusätzlich eine Seriendrosselspule $L_S$ aufweist. Dadurch wird eine einfache Bedämpfung eines Frequenzbandes erreicht. Der Serienkreis S entspricht dann einem vollwertigen Serienschwingkreis, dessen eigene Kreisfrequenz $\omega$ sich aus

$$\omega = \frac{1}{\sqrt{L_S \cdot C_S}}$$

ergibt.

In FIG 4 ist eine erweiterte Filteranordnung dargestellt. Bei dieser Anordnung ist es besonders vorteilhaft, daß ein weiterer Parallelschwingkreis $P_W$ bestehend aus einem Parallelkondensator $C_W$, einer Paralleldrosselspule $L_W$ und einem Parallelwiderstand $R_W$ in Reihe mit der zweiten Drosselspule geschaltet ist. Durch diese Ausführungsform ist eine optimierte Anpassung des Frequenzgangs der Filteranordnung an vorhandenen Netz- und Oberschwingungsverhältnisse möglich. Sie eignet sich besonders für ein Netz, das eine Mehrzahl von verschiedenen Oberschwingungen aufweist.

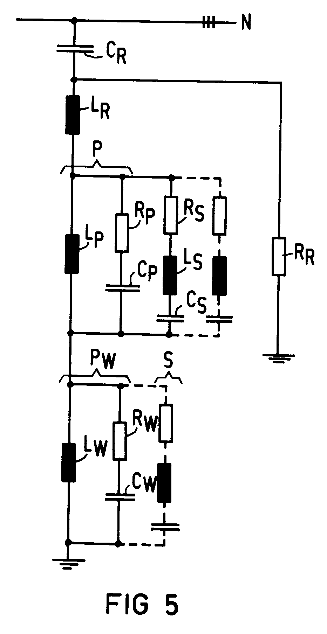

Der FIG 5 ist ein weiteres Ausführungsbeispiel zu entnehmen. In dieser Ausführung ist bei dem weiteren Parallelschwingkreis $P_W$ der Parallelwiderstand $R_W$ in Reihe mit dem Parallelkondensator $C_W$ geschaltet.

Zu dem Parallelkreis $P_W$ können auch ein oder mehrere Serienkreise S parallelgeschaltet werden. Dadurch wird eine Bedämpfung weiterer Harmonischen auf niedrigem Spannungsniveau erzielt.

Vorzugsweise werden Filteranordnungen zur stufenweisen Blindleistungskompensation in einem Netz mit vorgegebener Schaltreihenfolge verwendet, wobei jede Filteranordnung so bemessen ist, daß im Oberschwingungsbereich niedriger Ordnungszahlen nur eine geringe Resonanzerhöhung zwischen dem Netz und der jeweiligen Filteranordnung auftritt.

Durch die Aufschaltung einer Filteranordnung zur Blindleistungskompensation an eine Leitung N eines Netzes wird eine Verschiebung der ersten Parallelresonanzstelle in Richtung niedrigerer Ordnugnszahlen verursacht. Durch eine entsprechende Bemessung des Parallelschwingkreises bezüglich dieser Frequenz wird eine Bedämpfung der ersten Parallelresonanzstelle durch die Filteranordnung selbst bewirkt. Da dies zu dem auf dem niedrigen Spannungsniveau der Filteranordnung erfolgt, sind keine zusätzlichen umfangreichen Filter erforderlich, die direkt an die Hochspannung angeschlossen werden müssen.

Die Ordnungszahl $\nu$ der Harmonischen ergibt sich näherungsweise zu

$$\nu = \sqrt{\frac{S_K''}{Q_C}}$$

Dabei ist $S_K''$ die Netzkurzschlußleistung und $Q_C$ die vom Filter bereitgestellte kapazitive Blindleistung.

Eine stufenweise Blindleistungskompensation kann dann folgendermaßen ausgeführt werden:
Es werden beispielsweise drei an eine Leitung aufschaltbare Filter angeordnet, die jeweils einen (auch unterschiedlich großen) Anteil an kapazitiver Blindleistung bereitstellen. Durch ihren Blindleistungsanteil ist eine betriebliche Schaltreihenfolge vorgegeben. Das Frequenzverhalten der einzelnen Filter ist nun so abgestimmt, daß der Netzzustand, gegebenenfalls einschließlich eines vorher zugeschalteten Filters, berücksichtigt ist. Auf diese Weise kann nur eine geringe Resonanzüberhöhung im kritischen Oberschwingungsbereich auftreten.

Die Berechnung und Auslegung der Filteranordnung kann vorteilhafter Weise mittels eines entsprechenden Digitalprogramms vorgenommen werden.

Die oben angeführten Ausführungsbeispiele eignen sich auch besonders zur Erweiterung von bestehenden Anlagen, bei denen aus Platzgründen keine zusätzlichen Filter aufgestellt werden können und gegebenenfalls auch Platzeinsparungen bei den vorhandenen Filtern vorgesehen werden müssen.

Die Filteranordnungen können mit Vorteil bei Gleich- und Wechselspannung, auch mehrphasig, eingesetzt werden.

**Patentansprüche**

1. Hochpaß einer Filteranordnung für eine mit Stromrichtern verbundene Leitung mit hohem Spannungsniveau zur Filterung von Oberschwingungen und Bedämpfung von Resonanzstellen, bestehend aus:
   a) einer Reihenschaltung von
   a1) einem ersten Kondensator ($C_R$),
   a2) einer ersten Drosselspule ($L_R$),
   a3) einer zweiten Drosselspule ($L_P$);
   b) einem Widerstand ($R_R$), der den beiden Drosselspulen ($L_R$, $L_P$) parallelgeschaltet ist;
   c) einem zweiten Kondensator ($C_P$) der der zweiten Drosselspule ($L_P$) parallel zugeordnet ist; und
   d) einem Dämpfungswiderstand ($R_P$), der der zweiten Drosselspule ($L_P$) parallel zugeordnet ist;
   **gekennzeichnet dadurch,** daß der Dämpfungswiderstand ($R_P$) in Reihe mit dem zweiten Kondensator ($C_P$) geschaltet ist und diese Reihenschaltung der zweiten Drosselspule unmittelbar parallel geschaltet ist (FIG 1).

2. Hochpaß einer Filteranordnung für eine mit Stromrichtern verbundene Leitung mit hohem Spannungsniveau zur Filterung von Oberschwingungen und Bedämpfung von Resonanzstellen, bestehend aus:
   a) einer Reihenschaltung von
   a1) einem ersten Kondensator ($C_R$),
   a2) einer ersten Drosselspule ($L_R$),
   a3) einer zweiten Drosselspule ($L_P$);
   b) einem Widerstand (RR), der den beiden Drosselspulen ($L_R$, $L_P$) parallelgeschaltet ist;
   c) einem zweiten Kondensator ($C_P$) der der zweiten Drosselspule ($L_P$) parallel zugeordnet ist; und
   d) einem Dämpfungswiderstand ($R_P$), der der zweiten Drosselspule ($L_P$) parallel zugeordnet ist;
   **gekennzeichnet dadurch**, daß
   e) zumindest ein Serienkreis (S) bestehend aus
   e1) einem Serienkondensator ($C_S$) und
   e2) einem Serienwiderstand ($R_S$), der zweiten Drosselspule ($L_P$) parallelgeschaltet ist.

3. Hochpaß einer Filteranordnung nach Anspruch 1, **gekennzeichnet dadurch,** daß
   f) zumindest ein Serienkreis (S), bestehend aus
   f1) einem Serienkondensator ($C_S$) und
   f2) einem Serienwiderstand ($R_S$), der zweiten Drosselspule ($L_P$) parallelgeschaltet ist.

4. Hochpaß einer Filteranordnung nach Anspruch 2 oder 3, **dadurch gekennzeichnet,** daß der Serienkreis (S) zusätzlich eine Seriendrosselspule ($L_S$) aufweist (FIG 2 und 3).

5. Hochpaß einer Filteanordnung nach einem der vorherigen Ansprüche, **dadurch gekennzeichnet,** daß ein weiterer Parallelschwingkreis ($P_W$) bestehend aus
   g1) einem Parallelkondensator ($C_W$),
   g2) einer Paralleldrosselspule ($L_W$) und
   g3) einem Parallelwiderstand ($R_W$)
   in Reihe mit der zweiten Drosselspule geschaltet ist (FIG 4).

6. Verwendung von Filteranordnungen nach einem oder mehreren der vorherigen Ansprüche zur stufenweisen Blindleistungskompensation in einem Netz mit einer vorgegebenen Schaltreihenfolge, **dadurch gekennzeichnet,** daß jede Filteranordnung so bemessen ist, daß im Oberschwingbereich niedriger Ordnungszahlen nur eine geringe Resonanzüberhöhung zwischen dem Netz und der jeweiligen Filteranordnung auftritt.

**Claims**

1. High pass element of a filter arrangement for a line connected to power converters having a high voltage level for filtering harmonic oscillations and for damping points of resonance, consisting of:
   a) a series circuit arrangement of
   a1) a first capacitor ($C_R$),
   a2) a first choking coil ($L_R$),
   a3) a second choking coil ($L_P$);
   b) a resistor ($R_R$) which is connected in parallel to the two choking coils ($L_R$, $L_P$);
   c) a second capacitor ($C_P$) which is associated with the second choking coil ($L_P$) in parallel; and
   d) a damping resistor ($R_P$) which is associated with the second choking coil ($L_P$) in parallel;
   characterised in that the damping resistor ($R_P$) is connected in series with the second capacitor ($C_P$) and this series circuit arrangement is connected directly in parallel with the second choking coil (Figure 1).

2. High pass element of a filter arrangement for a line connected to power converters having a high voltage level for filtering harmonic oscillations and for damping points of resonance, consisting of:
   a) a series circuit arrangement of
   a1) a first capacitor ($C_R$),

a2) a first choking coil ($L_R$),

a3) a second choking coil ($L_P$);

b) a resistor (RR) (sic) which is connected in parallel to the two choking coils ($L_R$, $L_P$);

c) a second capacitor ($C_P$) which is associated with the second choking coil ($L_P$) in parallel; and

d) a damping resistor ($R_P$) which is associated with the second choking coil ($L_P$) in parallel;

characterised in that

e) at least one series circuit (S), consisting of

e1) a series capacitor ($C_S$) and

e2) a series resistor ($R_S$),

is connected in parallel with the second choking coil ($L_P$).

3. High pass element of a filter arrangement according to claim 1, characterised in that

f) at least one series circuit (S), consisting of

f1) a series capacitor ($C_S$) and

f2) a series resistor ($R_S$),

is connected in parallel with the second choking coil ($L_P$).

4. High pass element of a filter arrangement according to claim 2 or 3, characterised in that the series circuit (S) in addition has a series choking coil ($L_S$) (Figures 2 and 3).

5. High pass element of a filter arrangement according to one of the preceding claims, characterised in that a further parallel resonant circuit ($P_W$), consisting of

g1) a parallel capacitor ($C_W$),

g2) a parallel choking coil ($L_W$) and

g3) a parallel resistor ($R_W$),

is connected in series with the second choking coil (Figure 4).

6. Use of filter arrangements according to one or several of the preceding claims for step-wise reactive power compensation in a network having a given switching sequence, characterised in that each filter arrangement is dimensioned so that in the harmonic oscillation range of low ordinal numbers only a small resonance step-up occurs between the network and the respective filter arrangement.

**Revendications**

1. Filtre passe-haut d'un dispositif de filtrage pour une ligne raccordée à des convertisseurs statiques et possédant un niveau élevé de tension, pour le filtrage d'harmoniques supérieurs et l'affaiblissement de points de résonance, constitué par :

a) un circuit série formé de

a1) un premier condensateur ($C_R$),

a2) une première bobine d'arrêt ($L_R$),

a3) une seconde bobine d'arrêt ($L_P$);

b) une résistance (RR), qui est branchée en parallèle avec les deux bobines d'arrêt ($L_R$,$L_P$) ;

c) un second condensateur ($C_P$) qui est associé en parallèle à la seconde bobine d'arrêt ($L_P$); et

d) une résistance d'affaiblissement ($L_P$), qui est associée en parallèle à la seconde bobine d'arrêt ($L_P$);

caractérisé par le fait que la résistance d'affaiblissement ($R_P$) est branchée en série avec le second condensateur ($C_P$) et que ce montage série est directement branché en parallèle avec la seconde bobine d'arrêt (figure 1).

2. Filtre passe-haut d'un dispositif de filtrage pour une ligne raccordée à des convertisseurs statiques et possédant un niveau élevé de tension, pour le filtrage d'harmoniques supérieurs et l'affaiblissement de points de résonance, constitué par :

a) un circuit série formé de

a1) un premier condensateur ($C_R$),

a2) une première bobine d'arrêt ($L_R$),

a3) une seconde bobine d'arrêt ($L_P$);

b) une résistance ($R_R$), qui est branchée en parallèle avec les deux bobines d'arrêt ($L_R$,$L_P$);

c) un second condensateur ($C_P$) qui est associé en parallèle à la seconde bobine d'arrêt ($L_P$); et

d) une résistance d'affaiblissement ($L_P$), qui est associée en parallèle à la seconde bobine d'arrêt ($L_P$);

caractérisé par le fait que

e) au moins un circuit série (S) constitué par

e1) un condensateur série ($C_S$), et

e2) une résistance série ($R_S$),

est branché en parallèle avec la seconde bobine d'arrêt ($L_P$).

3. Filtre passe-haut d'un dispositif de filtrage suivant la revendication 1, caractérisé par le fait que

f) au moins un circuit série (S) constitué par

f1) un condensateur série ($C_S$), et

f2) une résistance série ($R_S$),

est branché en parallèle avec la seconde bobine d'arrêt ($L_P$).

4. Filtre passe-haut d'un dispositif de filtrage suivant la revendication 2 ou 3, caractérisé par le fait que le circuit série (S) comporte, en outre, une bobine d'arrêt série ($L_S$) (figures 2 et 3).

5. Filtre passe-haut d'un dispositif de filtrage suivant l'une des revendications précédentes, caractérisé par le fait qu'un second circuit oscillant parallèle ($P_W$) constitué par
   g1) un condensateur en parallèle (W),
   g2) une bobine d'arrêt en parallèle ($L_W$), et
   g3) une résistance en parallèle ($R_W$),
   est branché en série avec la seconde bobine d'arrêt (figure 4).

6. Utilisation de dispositifs de filtrage suivant une ou plusieurs des revendications précédentes pour compenser d'une manière échelonnée la puissance réactive dans un réseau possédant une séquence prédéterminée de commutation, caractérisé par le fait que chaque dispositif de filtrage est dimensionné de manière que seul un faible accroissement de la résonance apparaît entre le réseau et le dispositif de filtrage respectif, dans la gamme des harmoniques supérieurs possédant des nombres d'ordre faibles.

FIG 1

FIG 2

FIG 3

FIG 4

FIG 5